# EUROPEAN PATENT SPECIFICATION

(11) **EP 2 007 604 B1**
(45) Date of publication and mention of the grant of the patent: **13.02.2013**
(21) Application number: 07730543.1
(22) Date of filing: 27.03.2007
(51) Int. Cl.: B60P 7/08, A44B 11/12, B25B 25/00, F16G 11/12

(54) **LOAD-STRAP SYSTEM OPERATING DEVICE**
BETÄTIGUNGSVORRICHTUNG FÜR LASTGURTSYSTEM
DISPOSITIF DE MISE EN OEUVRE D'UN SYSTEME DE CERCLAGE DE CHARGE

(30) Priority: 04.04.2006 FI 20060326
(43) Date of publication of application: 31.12.2008
(73) Proprietor: Topsun Logistics Control Co., Ltd, Yuahuan Zhejiang (CN)
(72) Inventor: Takkinen, Esa, 51980 Lauteala (FI)
(74) Representative: Pitkänen, Hannu Alpo Antero
(86) International application number: PCT/FI2007/000074
(87) International publication number: WO 2007/113373

(56) References cited:
- WO-A1-00/09294
- WO-A1-2006/001714
- WO-A1-2006/001714
- DE-B3- 10 313 551
- DE-U- 6 949 277
- DE-U1- 8 815 737
- DE-U1- 20 010 024
- SE-C2- 527 309
- US-A- 2 146 104
- US-A- 4 641 875
- US-A- 5 816 185
- US-A- 6 158 932
- US-A1- 2003 146 424
- US-B1- 6 273 353

## Description

The present invention relates to a load-strap system operating device and more specifically a system, which can be tightened with the aid of the operating device.

A known load-strap system operates in such a way that length of strap attached to the operating device is attached to the desired location with the aid of a hook or similar. A second length of strap is attached with the aid of a hook or similar to another location, when it is intended to form a tight strap connection between the said two locations. In the operating device there is a spindle, which is formed of two halves, between which there is an aperture. The free end of the second said length of strap is threaded through the aperture and the strap is pre-tensioned by pulling the strap by hand as far through the aperture as it will go. After this, the spindle is rotated by pulling a lever belonging to the operating device backwards and forwards, when the strap winds around the spindle and tightens at the same time. A toothed plate is attached to the spindle and prevents the spindle from rotating open while the spindle is being rotated in the tightening direction by the lever of the operating device.

The aforementioned construction has the drawback that load straps are often very long and thus difficult to handle. In any event, the strap must be pulled through the aperture in the operating device, to be able to perform tightening. Straps can be icy or otherwise damaged, in which case it will be difficult, if not impossible, to thread them through the aperture. Even the fact that the ends of the strap are often frayed and thus thicker than usual, makes it difficult to start the threading.

In DE 20010024 has been described a load-strap system operating device, in which there are a body component, pivoted to which is a spindle and a body component equipped with a catch device and acting as a lever, the backwards and forwards movement of which is transmitted as a movement that rotates the spindle, through sprockets and a catch device attached to the spindle, and a catch device, which when it is closed prevents the sprockets from rotating backwards, wherein at least part of the spindle is movable away from and to the opening, in which the spindle is located in the operating position. In US-patent 5816185 has been described a ratcheting means for securing a cover about a boat. The means includes a first and second straps extending in opposite directions about the perimeter of the cover and coming together at the bow of the boat, and further includes a ratcheting device having a spindle which takes up the first strap and having an arm which is attached to the second strap.

The present invention is intended to create a load-strap system, with the aid of which the drawbacks of the prior art can be eliminated. The invention is specifically to create a system that will operate even when parts of the strap are icy, muddy, or damaged. The intention is also to create a system, the use of which avoids threading the strap through the difficult to use aperture and having to pull long lengths of strap through the aperture.

The aforementioned and other benefits and advantages of the present invention are achieved in the manner described as characteristic in the accompanying Claims.

In the following, the invention is described in greater detail with reference to the accompanying patent drawing, which shows an axonometric view of one well-regarded embodiment.

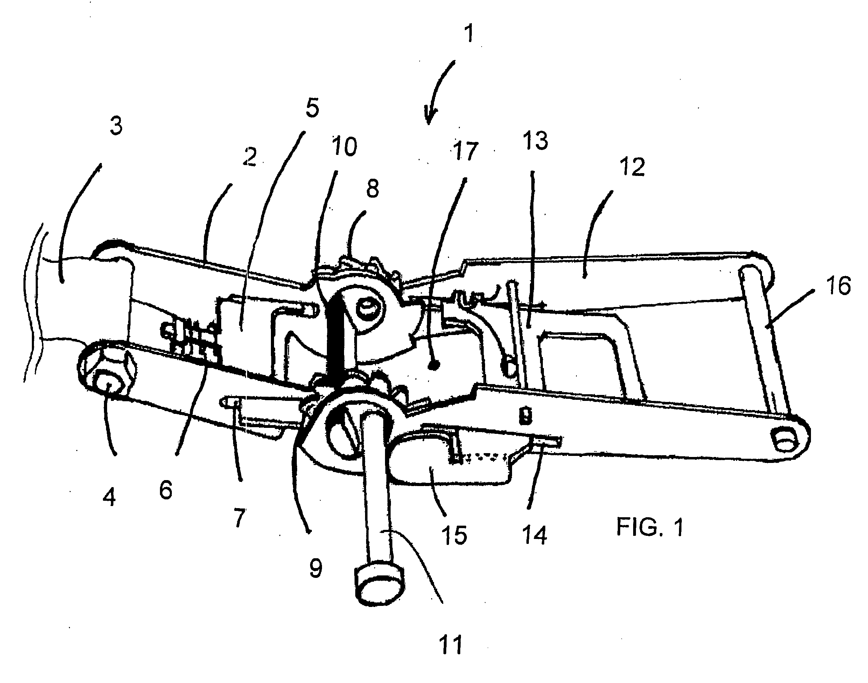

Thus, the figure shows the operating device 1 of a load-strap system according to the invention, which at first glance appears to be precisely similar to the most common operating devices used for the same purpose. Thus, the operating device is formed of a body component 2, at the outer end of which is a transverse pin 4, to which is usually attached a shortish strap 3, at the end of which is a suitable attachment means, such as a hook. At the opposite end of the body is an essentially transverse spindle 10, which in the traditional device is formed of two halves, between which is an aperture, into which one end of the strap length is threaded.

The intention is to wind the strap around the spindle 10. This can be done with the aid of a second body piece 12, which can be characterized as a lever, and which can be moved backwards and forwards. Like the body piece 2 described above, it is formed of mainly plate-like components, which are joined at their outer end by a pin-like element 16. Winding works with the aid of sprockets 8 and 9 attached to the spindle 10 and during rotation catch devices 5 and 13 corresponding to them, the first of which being pressed against the sprocket with the aid of a spring 6 and moving along slots 7 in both side plates of the body 2. The catch 5 prevents the sprockets 8 and 9 from rotating 'backwards'. Of course, rotation can be permitted, in which case the catch 5 is pulled away from the sprockets.

Spring loading presses catch 13 too against the sprockets 8 and 9. However, catch 13 does not prevent the body component 12 from rotating in the direction in which catch 13 slides 'with the pile' along the sprockets 8 and 9. Rotating the body component 12 in the other direction, however, causes the catch to lock in the teeth of the sprocket and the spindle 10 to rotate along with the movement of the component 12. Moving the component 12 backwards and forwards causes the strap to wind around the spindle and tighten.

The special feature of the present invention is that, instead of using a single spindle, which has an aperture in the centre for threading the strap, two separate spindles 10 and 11 are now used, one 11 of which can either be removed entirely, or at least pulled out of the way, essentially to the width of the strap being used.

The operating device of the system according to the invention is clearly easier to operate than the known solution. As the figure clearly shows, pulling the spindle 11 out of the road opens a wide opening 17 in the device, through which a dirty or icy strap can easily be pulled. Another aspect is that the strap need not even be pulled through the opening 17, but instead it can be folded in two and the loop thus formed can be pushed into the opening 17 and the spindle 11 pushed through the inside of the loop, thus in practice creating the initial situation for starting tightening. The strap can even be equipped with one or several ready-made loops, through which the spindle 11 is pushed.

The operating device according to the invention can also be used as a separate component for tightening a load strap that has loosened. In that case, the operating device is taken to a suitable location on the loosened strap and the strap is placed to run between the spindles 10 and 11, by first of all pulling the spindle 11 out of the way and then pushing it back to close with the strap between the spindles 10 and 11. The backwards and forwards of the lever 12 will then tighten the strap as it winds around the spindles in both directions.

An important additional aspect and advantage of the operating device 1 of the arrangement according to the invention is the fact that the catch 13 is combined with a protrusion 15 outside the body component 12, which, when the spindle 11 is not in place, will prevent the catch from dropping into the position in which winding can start. The catch will drop into the said position only once the spindle 11 has been pushed fully into place, allowing the protrusion 15 of the catch to move past the head of the spindle 11. A second advantage of this arrangement is that the protrusion 15 now holds the spindle firmly in place, preventing it from rising from the 'closed' position.

If it is desired to loosen the strap, both catches 5 and 13 are pulled clear of the sprockets. On the other hand, it can also be arranged for one of the catches 5, 13 to open automatically when the body components 2 and 12 are opened nearly to a straight angle, so that loosening the strap will only require the other catch to be opened. This can be easily implemented by suitably shaping the protrusion 15, as has been done by way of example in this case.

It is obvious that the material of manufacture of the operating device according to the invention will usually be metal, to achieve sufficient durability. The shape of the operating device according to the invention can differ even very greatly from the traditional model described above. For example, the shape of the cross-section of the spindles 10 and 11 can be round or angular or any shape at all that is practicable.

Though the above description is of a device comprising two separate spindles 10 and 11, there can of course also be a single spindle that is split, but which can be pulled out like the spindle 11. The strap is then placed in a suitable manner in the opening 17 of the operating device, from which the spindle has been pulled out of the way, the spindle then being pushed into place, so that the strap enters the split, or one fork of the spindle runs through the loop.

The operating device according to the invention can be attached as part of a system, in which there are straps that must be tightened, or it can also be made a fixed part of the system. All in all, the invention helps to accelerate load securing considerably while also making securing possible in conditions in which a traditional device simply would not work.

The manner of manufacture of the operating device according to the invention does not differ from that of a traditional device, nor does it substantially increase manufacturing costs.

Many variations are possible while remaining within the scope of protection of the accompanying Claims.

## Claims

1. Load-strap system operating device (1), in which there are a body component (2), pivoted to which is a spindle (10, 11) and a body component (12) equipped with a catch device (13) and acting as a lever, the backwards and forwards movement of which is transmitted as a movement that rotates the spindle, through sprockets (8, 9) and a catch device (13) attached to the spindle, and a catch device (5), which when it is closed prevents the sprockets (8, 9) from rotating backwards, where at least part (11) of the spindle (10, 11) is movable away from the opening (17), in which the spindle is located in the operating position **characterized in that** the catch device (13) includes a protrusion (15) outside the body of the device, wherein the protrusion is of a type that prevents the spindle winding when the spindle is pulled out, by resting against the spindle (11), and which locks the spindle (11) in place when it is pushed in.

2. Operating device according to claim 1, **characterized in that** the device includes a spindle comprising two spindle components, of which one component (10) is fixed and the other (11) can be pulled out.

3. Operating device according to claim 1, **characterized in that** the spindle (10, 11) is a totality that can be pulled out, in which there is a slot for the strap.

4. Operating device according to any of the above claim, **characterized in that** rotating the body components of the device to an essentially straight angle relative to each other causes one of the catches (5, 13) to open automatically.

## Patentansprüche

1. Spanngurtsystem-Bedienvorrichtung (1), umfassend einen Körperbestandteil (2), in Bezug worauf eine Spindel (10, 11) geschwenkt wird, und einen Körperbestandteil (12), der mit einer Rastvorrichtung (13) versehen ist und als Hebel wirkt, dessen Rückwärts- und Vorwärtsbewegung durch Ritzel (8, 9) als Bewegung, die die Spindel dreht, übertragen wird, und eine Rastvorrichtung (13), die an der Spindel angebracht ist, und eine Rastvorrichtung (5), die dann, wenn sie geschlossen ist, die Ritzel (8, 9) an einer Rückwärtsdrehung hindert, wobei zumindest ein Teil (11) der Spindel (10, 11) von einer Öffnung (17), in der sich die Spindel in der Betriebsposition befindet, weg beweglich ist, **dadurch gekennzeichnet, dass** die Rastvorrichtung (13) einen Vorsprung (15) außerhalb des Körpers der Vorrichtung umfasst, wobei der Vorsprung von einer Art ist, die durch Ruhen an der Spindel (11) ein Wickeln der Spindel verhindert, wenn die Spindel herausgezogen ist, und die die Spindel (11) an ihre Stelle sperrt, wenn diese eingeschoben ist.

2. Bedienvorrichtung nach Anspruch 1, **dadurch gekennzeichnet, dass** die Vorrichtung eine Spindel umfasst, die zwei Spindelbestandteile umfasst, wovon ein Bestandteil (10) fest ist und der andere (11) herausgezogen werden kann.

3. Bedienvorrichtung nach Anspruch 1, **dadurch gekennzeichnet, dass** die Spindel (10, 11) eine Gesamtheit ist, die herausgezogen werden kann, worin sich ein Schlitz für den Gurt befindet.

4. Bedienvorrichtung nach einem der obigen Ansprüche, **dadurch gekennzeichnet, dass** das Drehen der Körperbestandteile der Vorrichtung zu einem im Wesentlichen gestreckten Winkel in Bezug zueinander verursacht, dass sich eine der Rasten (5, 13) automatisch öffnet.

## Revendications

1. Dispositif de manutention à système sangle-charge (1) dans lequel figure un composant de corps (2) sur lequel une tige (10, 11) est pivotée, et un composant de corps (12) doté d'un grappin (13) et agissant en tant que levier, dont le mouvement vers l'avant et vers l'arrière est transmis en tant que mouvement qui fait tourner la tige, via des pignons (8, 9) et un grappin (13) fixé sur la tige, et un grappin (5) qui, lorsqu'il est fermé, évite que les pignons (8, 9) ne tournent vers l'arrière, au moins une partie (11) de la tige (10, 11) pouvant être éloignée de l'ouverture (17), dans laquelle la tige est placée dans la position de fonctionnement, **caractérisé en ce que** le grappin (13) comprend une saillie (15) en-dehors du corps du dispositif, sachant que la saillie est d'un type évitant que la tige ne prenne un trajet sinueux lorsque la tige est tirée vers l'extérieur, en reposant contre la tige (11), et qui verrouille la tige (11) en place lorsqu'elle est poussée vers l'intérieur.

2. Dispositif de manutention selon la revendication 1, **caractérisé en ce que** le dispositif comprend une tige comprenant deux composants de tige, dont l'un composant (10) est fixe et l'autre (11) peut être tiré vers l'extérieur.

3. Dispositif de manutention selon la revendication 1, **caractérisé en ce que** la tige (10, 11) est une totalité qui peut être tirée vers l'extérieur dans laquelle figure une fente pour la sangle.

4. Dispositif de manutention selon l'une quelconque des revendications précédentes, **caractérisé en ce que** la rotation des composants de corps du dispositif à un angle essentiellement droit l'un par rapport à l'autre fait que l'un des grappins (5, 13) s'ouvre automatiquement.
